# EUROPEAN PATENT APPLICATION

(11) **EP 2 639 509 A2**
(43) Date of publication of application: **18.09.2013**
(21) Application number: 13157970.8
(22) Date of filing: 06.03.2013
(51) Int. Cl.: F23R 3/28, F02C 7/22

(54) **Combustor and method of reducing thermal stresses in a combustor**

(30) Priority: 12.03.2012 US 201213417409
(71) Applicant: General Electric Company, Schenectady, New York 12345 (US)
(72) Inventor: Stoia, Lucas John, Greenville, SC South Carolina 29615 (US); Melton, Patrick Benedict, Greenville, SC South Carolina 29615 (US); DiCintio, Richard Martin, Greenville, SC South Carolina 29615 (US)
(74) Representative: Cleary, Fidelma

(57) **Abstract**

A combustor 14 includes a combustion chamber 38 and a casing 28 that circumferentially surrounds the combustion chamber to at least partially define an annular passage 56 between the casing 28 and the combustion chamber 38. A fuel plenum 72 extends radially through the casing to provide fluid communication through the casing to the annular passage, and a liner 52 extends inside at least a portion of the fuel plenum 72 to prevent fuel from directly impinging upon at least a portion of the fuel plenum 72. A method of reducing thermal stresses in a combustor 14 includes flowing a fuel inside a fuel plenum 72 that extends radially through a casing 28, shielding at least a portion of the fuel plenum 72 from direct impingement by the fuel radially inward of the casing 28, and flowing the fuel from the fuel plenum 72 into an annular passage 56 between the casing and a combustion chamber 38.

## Description

The present invention generally involves a combustor, such as may be incorporated into a gas turbine or other turbomachine, and method of reducing thermal stresses in the combustor. In particular, various embodiments of the present invention reduce thermal stresses in a combustor fuel circuit.

Combustors are commonly used in industrial and power generation operations to ignite fuel to produce combustion gases having a high temperature and pressure. A typical combustor includes a casing that surrounds a combustion chamber to define an annular passage between the combustion chamber and the casing. One or more fuel nozzles may be radially arranged in an end cover at one end of the combustor. The nozzles mix fuel with a working fluid, and the mixture flows into the combustion chamber and ignites to produce combustion gases having a high temperature and pressure.

Combustors often utilize multiple fuel circuits to enhance thermodynamic efficiency while also reducing undesirable emissions. For example, a primary fuel circuit may supply liquid fuel to the nozzles during startup of the combustor to promote flame stability. A secondary fuel circuit may supply less expensive gaseous fuel to the nozzles during steady state operations to reduce operating costs. A tertiary fuel circuit may directly inject liquid and/or gaseous fuel into the combustion chamber downstream from the nozzles during high power operations to increase the combustor firing temperature without exceeding emissions limits. Lastly, a quaternary fuel circuit may supply liquid and/or gaseous fuel into the annular passage upstream from the nozzles to pre-mix with the working fluid before reaching the nozzles.

The temperature differences between the fuel and the working fluid can create substantial thermal stresses in both the fuel circuits and adjacent components. In addition, the fuel circuits often include relatively small passages or ports that may be susceptible to clogging, such as from corrosion products formed in the fuel circuit and subsequently liberated. As a result, fuel circuits often require more expensive materials that are corrosion resistant and have a high strength. In addition, the materials may often require substantial heat treatment that further increases the manufacturing cost of the fuel circuits. Therefore, an improved combustor and method of reducing thermal stresses in the combustor that reduces the material and/or manufacturing cost of the fuel circuits would be useful.

Various aspects and advantages of the invention are set forth below in the following description, or may be clear from the description, or may be learned through practice of the invention.

One embodiment of the present invention is a combustor that includes a combustion chamber and a casing that circumferentially surrounds the combustion chamber to at least partially define an annular passage between the casing and the combustion chamber. A fuel plenum extends radially through the casing to provide fluid communication through the casing to the annular passage, and the combustor includes means for shielding at least a portion of the fuel plenum from direct impingement by fuel flowing through the fuel plenum.

Another embodiment of the present invention is a combustor that includes a combustion chamber and a casing that circumferentially surrounds the combustion chamber to at least partially define an annular passage between the casing and the combustion chamber. A fuel plenum extends radially through the casing to provide fluid communication through the casing to the annular passage, and a liner extends inside at least a portion of the fuel plenum to prevent fuel from directly impinging upon at least a portion of the fuel plenum.

The present invention may also include a method of reducing thermal stresses in a combustor that includes flowing a fuel inside a fuel plenum that extends radially through a casing, shielding at least a portion of the fuel plenum from direct impingement by the fuel radially inward of the casing, and flowing the fuel from the fuel plenum into an annular passage between the casing and a combustion chamber.

Various aspects and embodiments of the present invention will now be described in connection with the accompanying drawings, in which:
Fig. 1 is a simplified cross-section of an exemplary gas turbine that may incorporate various embodiments of the present invention;
Fig. 2 is an enlarged side and partial cross-section view of the combustor shown in Fig. 1 according to a first embodiment of the present invention;
Fig. 3 is an enlarged side cross-section view of a portion of the fuel plenum shown in Fig. 2; and
Fig. 4 is an axial cross-section view of the fuel plenum shown in Fig. 2.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. In addition, the terms "upstream" and "downstream" refer to the relative location of components in a fluid pathway. For example, component A is upstream from component B if a fluid flows from component A to component B. Conversely, component B is downstream from component A if component B receives a fluid flow from component A.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include a combustor and method of reducing thermal stresses in the combustor. The combustor generally includes a casing that circumferentially surrounds a combustion chamber to at least partially define an annular passage between the casing and the combustion chamber. One or more fuel circuits supply a liquid and/or gaseous fuel through the casing to nozzles and/or a combustion chamber. In particular embodiments, a fuel plenum supplies the fuel to the annular passage and/or circumferentially around the combustion chamber, and a liner or other means inside the fuel plenum shields at least a portion of the fuel plenum from contact with the fuel to reduce the thermal stresses created in the fuel plenum. Although exemplary embodiments of the present invention will be described generally in the context of a combustor incorporated into a gas turbine for purposes of illustration, one of ordinary skill in the art will readily appreciate that embodiments of the present invention may be applied to any combustor and are not limited to a gas turbine combustor or other turbomachine unless specifically recited in the claims.

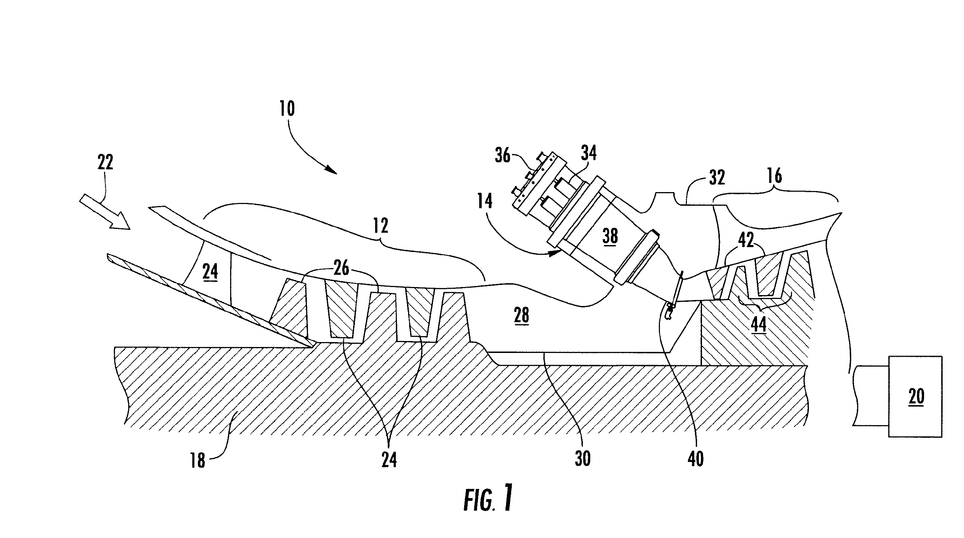

Fig. 1 provides a simplified cross-section of an exemplary gas turbine 10 that may incorporate various embodiments of the present invention. As shown, the gas turbine 10 may generally include a compressor 12 at the front, one or more combustors 14 radially disposed around the middle, and a turbine 16 at the rear. The compressor 12 and the turbine 16 typically share a common rotor 18 connected to a generator 20 to produce electricity.

The compressor 12 may be an axial flow compressor in which a working fluid 22, such as ambient air, enters the compressor 12 and passes through alternating stages of stationary vanes 24 and rotating blades 26. A compressor casing 28 contains the working fluid 22 as the stationary vanes 24 and rotating blades 26 accelerate and redirect the working fluid 22 to produce a continuous flow of compressed working fluid 22. The majority of the compressed working fluid 22 flows through a compressor discharge plenum 30 to the combustor 14.

The combustor 14 may be any type of combustor known in the art. For example, as shown in Fig. 1, a combustor casing 32 may circumferentially surround some or all of the combustor 14 to contain the compressed working fluid 22 flowing from the compressor 12. One or more fuel nozzles 34 may be radially arranged in an end cover 36 to supply fuel to a combustion chamber 38 downstream from the fuel nozzles 34. Possible fuels include, for example, one or more of blast furnace gas, coke oven gas, natural gas, vaporized liquefied natural gas (LNG), hydrogen, and propane. The compressed working fluid 22 may flow from the compressor discharge plenum 30 along the outside of the combustion chamber 38 before reaching the end cover 36 and reversing direction to flow through the fuel nozzles 34 to mix with the fuel. The mixture of fuel and compressed working fluid 22 flows into the combustion chamber 38 where it ignites to generate combustion gases having a high temperature and pressure. The combustion gases flow through a transition piece 40 to the turbine 16.

The turbine 16 may include alternating stages of stators 42 and rotating buckets 44. The first stage of stators 42 redirects and focuses the combustion gases onto the first stage of turbine buckets 44. As the combustion gases pass over the first stage of turbine buckets 44, the combustion gases expand, causing the turbine buckets 44 and rotor 18 to rotate. The combustion gases then flow to the next stage of stators 42 which redirects the combustion gases to the next stage of rotating turbine buckets 44, and the process repeats for the following stages.

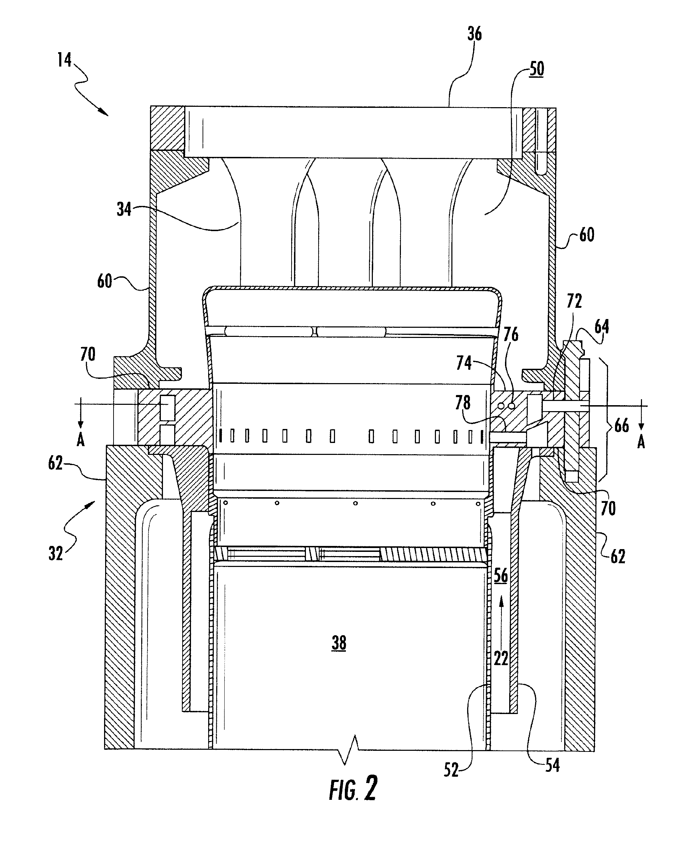

Fig. 2 provides an enlarged side view and partial cross-section of the combustor 14 shown in Fig. 1 according to a first embodiment of the present invention. As shown, the combustor casing 32 and end cover 36 define a volume 50, also referred to as the head end, inside the combustor 14, and a liner 52 circumferentially surrounds and defines at least a portion of the combustion chamber 38. A flow sleeve 54 may circumferentially surround at least a portion of the combustion chamber 38 to define an annular passage 56 between the flow sleeve 54 and the liner 52. In this manner, the working fluid 22 may flow through the annular passage 56 to provide convective cooling to the liner 24. When the working fluid 22 reaches the head end or volume 50, the working fluid 22 reverses direction to flow through one or more fuel nozzles 34 and into the combustion chamber 38.

The combustor casing 32 may include multiple annular sections that facilitate assembly and/or accommodate thermal expansion during operations. For example, as illustrated in the particular embodiment shown in Fig. 2, the combustor casing 32 may include a first annular casing 60 adjacent to the end cover 36 and a second annular casing 62 upstream from the first annular casing 60. A clamp, weld bead, and/or plurality of bolts 64 may circumferentially surround the combustor 14 to provide a connection or joint 66 between the first and second annular casings 60, 62.

In particular embodiments, a flange 70 may extend radially between the first and second annular casings 60, 62, and the flange 70 may include one or more internal fluid passages that provide fluid communication through the connection 66. For example, the flange 70 may include a fuel plenum 72 that extends radially through the casing 32 to provide fluid communication through the casing 32 to the annular passage 56. A plurality of vanes 74 may circumferentially surround the combustion chamber 38 and extend radially in the annular passage 56 to guide the working fluid 22 flow. In particular embodiments, the vanes 74 may be angled to impart swirl to the working fluid 22 flowing through the annular passage 56. The flange 70 may connect to one or more of the vanes 74, and the fuel plenum 72 may extend inside one or more of the vanes 74 so fuel may flow through quaternary fuel ports 76 in the vanes 74 to mix with the working fluid 22 flowing through the annular passage 56. Alternately, or in addition, the flange 70 may include a diluent passage 78 that provides a fluid pathway for the working fluid 22 to flow into or around the fuel nozzles 34 before flowing into the combustion chamber 38.

As the working fluid 22 flows through the annular passage 56, the difference in temperature between the working fluid 22 and the fuel may create substantial thermal gradients in the flange 70, fuel plenum 72, and/or vanes 74. The thermal gradients may in turn create substantial thermal stresses that require the use of high alloy steels containing nickel, chromium, and iron and/or expensive and time consuming heat treatment during manufacture. To reduce the material and/or manufacturing costs, various embodiments of the present invention may include means for shielding at least a portion the fuel plenum 72 from direct impingement by fuel flowing through the fuel plenum 72. As used herein, the function of the means includes preventing the fuel flowing through the fuel plenum 72 from directly impinging against at least a portion of the fuel plenum 72. In particular embodiments, the means may further prevent the fuel flowing through the fuel plenum 72 from directly impinging with any of the fuel plenum 72 between the vanes 74 and the casing 32. By preventing the fuel flowing through the fuel plenum 72 from directly impinging with portions of the fuel plenum 72, the means reduces the localized cooling of the fuel plenum 72 caused by fuel that would otherwise impinge on the fuel plenum 72. In this manner, the means acts as a shield between the fuel and the fuel plenum 72 to reduce thermal gradients in the flange 70 and/or fuel plenum 72. Alternately or in addition, the means may also protect the fuel plenum 72 from the erosive effects of the fuel flow which may strip or otherwise liberate corrosion products from the surface of the fuel plenum 72. As a result, the means enables the use of lower cost materials, such as carbon or low alloy steel, for portions of the fuel plenum 72 and/or eliminates or reduces the amount of heat treatment required during manufacture of portions of the fuel plenum 72.

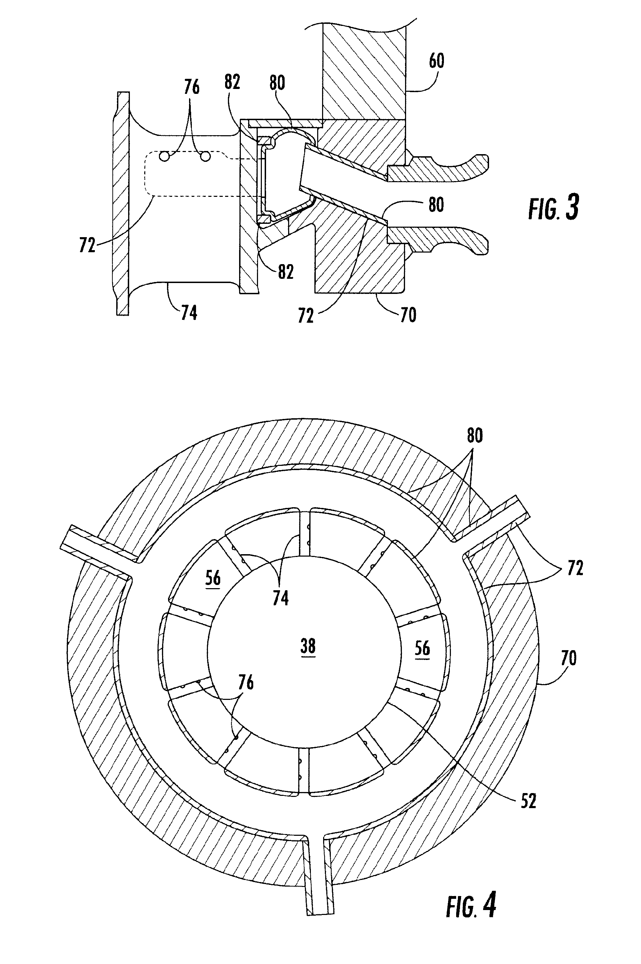

Fig. 3 provides an enlarged side cross-section view of a portion of the fuel plenum 72 shown in Fig. 2, and Fig. 4 provides an axial cross-section view of the fuel plenum 72 shown in Fig. 2 taken along line A--A. As shown in Figs. 3 and 4, the structure for the means for shielding at least a portion the fuel plenum 72 from direct impingement by fuel flowing through the fuel plenum 72 may be an insert, liner 80, or other shield made from materials having suitable corrosive and strength characteristics. For example, the liner 80 may be made from high alloy steels containing nickel, chromium, and iron, allowing use of lower cost materials, such as carbon or low alloy steel, for the fuel plenum 72. The liner 80 may be inserted into at least a portion of the fuel plenum 72 and lightly compressed against the fuel plenum 72 to hold it tightly inside at least a portion of the fuel plenum 72 radially inward of the casing 32. As further shown in Figs. 3 and 4, the fuel plenum 72 may extend circumferentially around the combustion chamber 38, and the same or a separate liner 80 may extend inside the fuel plenum 72 circumferentially around the combustion chamber 38. In this manner, the liner 80 may prevent fuel flowing through the fuel plenum 72 from directly impinging with any of the fuel plenum 72 between the vanes 74 and the casing 32. However, one of ordinary skill in the art should readily appreciate that particular embodiments of the invention do not require the liner 80 to extend continuously inside the fuel plenum 72 unless specifically recited in the claims.

As shown in Figs. 3 and 4, the liner 80 may include multiple sections press fit or otherwise sealed together to provide a fluid boundary inside some or all of the fuel plenum 72. In addition, one or more detents 82 inside the fuel plenum 72 may be in contact with the liner 80 to hold the liner 80 in place inside the fuel plenum 72. The detents 82 may include any suitable structure known in the art for restraining movement between adjacent objects. For example, as shown most clearly in Fig. 3, the detents 82 may include rings, projections, or other surface features inside the fuel plenum 72 that provide a friction fit between the fuel plenum 72 and the liner 80 to hold the liner 80 in place. The detents 82 may also provide a seal between the fuel plenum 72 and the liner 80. In this manner, the detents 82 may reduce or prevent fuel from flowing around the liner 80 and over areas of the fuel plenum 72 made from lower cost materials more susceptible to corrosion, thereby possibly liberating corrosion products into the fuel flow.

The structures described and illustrated in Figs. 1-4 may also provide a method of reducing thermal stresses in the combustor 14. The method may include flowing the fuel inside the fuel plenum 72, shielding at least a portion of the fuel from directly impinging the fuel plenum 72 between the vanes 74 and the casing 32, and flowing the fuel from the fuel plenum 72 into the annular passage 56 between the casing 32 and the combustion chamber 38. In particular embodiments, the method may include shielding the entire fuel plenum 72 between the vanes 74 and the casing 32 from direct impingement from the fuel. Alternately or in addition, the method may include flowing the fuel inside the fuel plenum 72 circumferentially around the combustion chamber 38 and/or shielding the fuel flowing inside the fuel plenum 72 circumferentially around the combustion chamber 38 from directly impinging the fuel plenum 72.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims or if they include equivalent structural elements with insubstantial differences from the literal languages of the claims.

Various aspects and embodiments of the present invention are defined by the following numbered clauses:
1. A combustor comprising:
   a. a combustion chamber;
   b. a casing that circumferentially surrounds the combustion chamber to at least partially define an annular passage between the casing and the combustion chamber;
   c. a fuel plenum that extends radially through the casing to provide fluid communication through the casing to the annular passage; and
   d. means for shielding at least a portion of the fuel plenum from direct impingement by fuel flowing through the fuel plenum.
2. The combustor as in clause 1, further comprising a vane radially inward from the casing, wherein the means for shielding prevents fuel from direct impingement of the fuel plenum between the vane and the casing.
3. The combustor as in any preceding clause, wherein the means for shielding extends inside the fuel plenum radially inward of the casing.
4. The combustor as in any preceding clause, wherein the fuel plenum extends circumferentially around the combustion chamber.
5. The combustor as in any preceding clause, wherein the means for shielding extends inside the fuel plenum circumferentially around the combustion chamber.
6. The combustor as in any preceding clause, further comprising a detent inside the fuel plenum and in contact with the means for shielding.
7. The combustor as in any preceding clause, further comprising a plurality of vanes that circumferentially surrounds the combustion chamber in the annular passage.
8. The combustor as in any preceding clause, wherein the fuel plenum extends inside one or more of the plurality of vanes.
9. A combustor comprising:
   a. a combustion chamber;
   b. a casing that circumferentially surrounds the combustion chamber to at least partially define an annular passage between the casing and the combustion chamber;
   c. a fuel plenum that extends radially through the casing to provide fluid communication through the casing to the annular passage; and
   d. a liner that extends inside at least a portion of the fuel plenum to prevent fuel from directly impinging upon at least a portion of the fuel plenum.
10. The combustor as in any preceding clause, further comprising a vane radially inward from the casing, wherein the liner extends inside the fuel plenum to prevent fuel from directly impinging upon any portion of the fuel plenum between the vane and the casing.
11. The combustor as in any preceding clause, wherein the liner extends inside the fuel plenum radially inward of the casing.
12. The combustor as in any preceding clause, wherein the fuel plenum extends circumferentially around the combustion chamber.
13. The combustor as in any preceding clause, wherein the liner extends inside the fuel plenum circumferentially around the combustion chamber.
14. The combustor as in any preceding clause, further comprising a detent inside the fuel plenum and in contact with the liner.
15. The combustor as in any preceding clause, further comprising a plurality of vanes that circumferentially surrounds the combustion chamber in the annular passage.
16. The combustor as in any preceding clause, wherein the fuel plenum extends inside one or more of the plurality of vanes.
17. A method of reducing thermal stresses in a combustor, comprising:
   a. flowing a fuel inside a fuel plenum that extends radially through a casing;
   b. shielding at least a portion of the fuel plenum from direct impingement by the fuel radially inward of the casing; and
   c. flowing the fuel from the fuel plenum into an annular passage between the casing and a combustion chamber.
18. The method as in any preceding clause, further comprising shielding the entire portion of the fuel plenum between the casing and a vane radially inward from the casing from direct impingement by the fuel.
19. The method as in any preceding clause, further comprising flowing the fuel inside the fuel plenum circumferentially around the combustion chamber.
20. The method as in any preceding clause, further comprising shielding the fuel flowing inside the fuel plenum circumferentially around the combustion chamber from directly impinging upon the fuel plenum.

## Claims

1. A combustor (14) comprising:
a. a combustion chamber (38);
b. a casing (28) that circumferentially surrounds the combustion chamber (38) to at least partially define an annular passage (56) between the casing (28) and the combustion chamber (38);
c. a fuel plenum (72) that extends radially through the casing (28) to provide fluid communication through the casing to the annular passage; and
d. means (52) for shielding at least a portion of the fuel plenum (72) from direct impingement by fuel flowing through the fuel plenum.

2. The combustor (14) as in claim 1, further comprising a vane (74) radially inward from the casing (28), wherein the means for shielding (52) prevents fuel from direct impingement of the fuel plenum between the vane and the casing.

3. The combustor (14) as in any preceding claim, wherein the means for shielding (52) extends inside the fuel plenum (72) radially inward of the casing.

4. The combustor (14) as in any preceding claim, wherein the fuel plenum (72) extends circumferentially around the combustion chamber (38).

5. The combustor (14) as in claim 4, wherein the means for shielding (52) extends inside the fuel plenum (72) circumferentially around the combustion chamber (38).

6. The combustor (14) as in any preceding claim, further comprising a detent (82) inside the fuel plenum (72) and in contact with the means for shielding (52).

7. The combustor (14) as in any preceding claim, further comprising a plurality of vanes (74) that circumferentially surrounds the combustion chamber (38) in the annular passage (56).

8. The combustor (14) as in claim 7, wherein the fuel plenum (72) extends inside one or more of the plurality of vanes (74).

9. A method of reducing thermal stresses in a combustor (14), comprising:
a. flowing a fuel inside a fuel plenum (72) that extends radially through a casing (28);
b. shielding at least a portion of the fuel plenum (72) from direct impingement by the fuel radially inward of the casing (28); and
c. flowing the fuel from the fuel plenum (72) into an annular passage (56) between the casing (28) and a combustion chamber (38).

10. The method as in claim 9, further comprising shielding the entire portion of the fuel plenum (72) between the casing (28) and a vane (74) radially inward from the casing (28) from direct impingement by the fuel.

11. The method as in claim 9 or claim 10, further comprising flowing the fuel inside the fuel plenum (72) circumferentially around the combustion chamber (38).

12. The method as in any of claims 9 to 11, further comprising shielding the fuel flowing inside the fuel plenum (72) circumferentially around the combustion chamber (38) from directly impinging upon the fuel plenum (72).
